Europäisches Patentamt

European Patent Office

Office européen des brevets

(19)

(11) Numéro de publication : **0 491 578 B1**

(12) **FASCICULE DE BREVET EUROPEEN**

(45) Date de publication du fascicule du brevet :
30.03.94 Bulletin 94/13

(51) Int. Cl.⁵ : **B23K 11/25**

(21) Numéro de dépôt : **91403037.4**

(22) Date de dépôt : **13.11.91**

(54) **Procédé de soudage par résistance par points et électrode de soudage pour la mise en oeuvre du procédé.**

(30) Priorité : **19.12.90 FR 9015946**

(43) Date de publication de la demande :
**24.06.92 Bulletin 92/26**

(45) Mention de la délivrance du brevet :
**30.03.94 Bulletin 94/13**

(84) Etats contractants désignés :
**AT BE CH DE DK ES FR GB GR IT LI LU NL SE**

(56) Documents cités :
**GB-A- 2 022 290**
**US-A- 4 792 656**
**US-A- 4 876 430**
**BRITISH WELDING JOURNAL vol. 14, Novembre 1967, CAMBRIDGE(GB) HAYWARD B.P.:
'Scientific instrumentation as an aid to the control of resistance weld quality'**
**PT WERKUIGEBOUW vol. 43, no. 8, Août 1988, RIJWIJK(NL) pages 27 - 31; J.O.ZWOLSMAN:
'De contactweerstand in het weerstandlassen'**

(73) Titulaire : **SOLLAC**
**Immeuble Elysées-La Défense, 29 Le Parvis**
**F-92800 Puteaux (FR)**

(72) Inventeur : **Gobez, Pascal**
**145, avenue Kléber**
**F-59240 Dunkerque (FR)**
Inventeur : **Thieblemont, Eric**
**11, rue Durival**
**F-54000 Nancy (FR)**
Inventeur : **Bouzekri, Mohamed**
**10, rue des Mimosas**
**F-57270 Uckange (FR)**

(74) Mandataire : **Lanceplaine, Jean-Claude et al**
**CABINET LAVOIX 2, Place d'Estienne d'Orves**
**F-75441 Paris Cédex 09 (FR)**

Jouve, 18, rue Saint-Denis, 75001 PARIS

## Description

La présente invention concerne un procédé de soudage par résistance par points et une électrode de soudage pour la mise en oeuvre de ce procédé.

Les tôles minces de 0,7 à 2,5mm d'épaisseur utilisées notamment dans l'industrie automobile ou l'électroménager sont généralement soudées entre elles par un procédé de soudage par résistance par points.

A cet effet, deux ou plusieurs pièces sont pressées par un effort déterminé entre deux organes d'amenée de courant qui sont le plus souvent constitués par des électrodes en cuivre ou en alliage de cuivre.

Au contact des électrodes à souder, le courant électrique circule d'une électrode à l'autre en passant par lesdites pièces à souder.

Un échauffement se produit, par effet Joule, dans les pièces à souder insérées entre les deux électrodes en particulier au niveau du contact entre les pièces à souder où la résistance de contact est la plus faible.

Ce chauffage des pièces à souder au niveau de la surface de contact permet de fondre le métal et de créer un point de soudure après coupure du courant et solidification du noyau fondu.

Pour réaliser un soudage parfait, l'intensité du courant électrique circulant entre les deux électrodes doit être calculée correctement.

En effet, si cette intensité est trop faible, l'échauffement dans les pièces à souder n'est pas suffisant pour fondre le métal et créer le noyau fondu nécessaire pour réaliser un point de soudure.

De même, si l'intensité du courant électrique est trop forte, l'échauffement dans les pièces à souder est trop important et le noyau fondu peut brûler entraînant ainsi l'apparition de métal oxydé dans le noyau fondu et par conséquent dans le point de soudure qui n'a plus les caractéristiques mécaniques souhaitées.

Le réglage de l'intensité du courant électrique dans les installations de soudage par résistance par points s'effectue, soit par modification de la tension dans le circuit primaire alimentant les électrodes, soit par changement du rapport de bobinage entre le circuit primaire et le circuit secondaire, ou soit en réglant le taux d'ouverture des thyristors dont est muni le circuit électrique.

Le plus souvent, le réglage du courant se fait en augmentant ou en diminuant le taux d'ouverture des thyristors ce qui entraîne, respectivement, une diminution ou une augmentation de l'intensité efficace dans le circuit électrique.

Comme on le sait, l'intensité du courant électrique qui alimente les électrodes afin d'obtenir un soudage parfait est fonction d'un certain nombre de paramètres, qui sont :

- la résistance du contact entre la première électrode et la pièce correspondante,
- la résistance de la première pièce,
- la résistance du contact entre les deux pièces,
- la résistance de la deuxième pièce,
- la résistance du contact entre la deuxième électrode et la pièce correspondante,
- le temps de soudage,
- et l'effort exercé entre les deux électrodes.

Afin de réaliser un soudage optimal, il est nécessaire de connaître parfaitement la résistance de contact ente les deux tôles pour ajuster le courant électrique nécessaire à la formation d'un noyau fondu parfait compte tenu du temps de soudage et des autres paramètres.

Pour cela, on pratique avant le début d'une grande série de soudage, une série d'essais qui, par tâtonnements successifs, permettent de déterminer les paramètres idéaux de la soudure.

Mais, les résistances de contact ne sont pas constantes et varient dans le temps.

En effet, elles diminuent pour plusieurs raisons.

Après un certain nombre de points de soudure effectués, les électrodes de soudage s'écrasent et les surfaces de contact augmentent, faisant diminuer la résistance de contact entre les pièces et les électrodes et au cours du soudage, la rugosité des pièces diminue du fait du chauffage et de la fonte progressive du métal, augmentant ainsi la surface de contact entre les pièces et diminuant leur résistance de contact.

De plus, au cours du soudage, les forces de pression entre les électrodes varient ce qui fait varier les résistances de contact entre les pièces et les électrodes.

Pour obtenir un bon soudage, il est donc nécessaire de mesurer les résistances de contact, au cours du soudage, afin d'ajuster l'intensité du courant de soudage.

On connaît dans le brevet GB-A-2 022 290 un procédé de soudage par résistance par points de deux pièces métalliques, dans lequel on presse lesdites pièces entre les électrodes alimentées en courant électrique de soudage par un circuit comprenant notamment des thyristors et on ajuste l'intensité du courant de soudage à appliquer après détermination de la résistance globale entre les électrodes.

La présente invention a donc pour but de proposer un procédé de soudage dans lequel on ajuste l'intensité du courant électrique entre les électrodes au cours du soudage.

La présente invention a pour objet un procédé de soudage par résistance par points d'au moins deux pièces métalliques, selon lequel on presse lesdites pièces entre deux électrodes alimentées en courant électrique de soudage par un circuit comprenant notamment des thyristors, et on ajuste l'intensité du courant de soudage à appliquer après détermination de la résistance globale entre les électrodes, caractérisé en ce que, au cours du soudage :

- on détermine les résistances de contact entre chaque électrode avec la pièce avec laquelle elle est en contact, en envoyant, lorsque les thyristors du circuit sont ouverts, dans une première partie de chaque électrode de soudage un courant continu qui passe dans la pièce en contact avec l'électrode correspondante et ressort dans une seconde partie de l'électrode correspondante, isolée électriquement de ladite première partie,
- on calcule la résistance de contact entre lesdites pièces par différence entre la résistance globale et la somme des résistances de chaque pièce et des résistances de contact pièces-électrodes,
- on détermine l'intensité réelle du courant électrique de soudage,
- et on ajuste les différents paramètres de soudage desdites pièces pour conserver une intensité optimale constante du courant électrique de soudage.

Selon d'autres caractéristiques de l'invention :
- on détermine les résistances de contact pièces-électrodes
- on mesure la tension aux bornes des deux parties de chaque électrode pour déterminer sa résistance de contact avec la pièce correspondante,
- on alimente les électrodes en courant continu toutes les demi-alternances du courant électrique de soudage.

La présente invention a également pour objet une électrode de soudage pour la mise en oeuvre de ce procédé, caractérisée en ce qu'elle comprend deux parties distinctes isolées électriquement l'une de l'autre, une première partie centrale entourée d'un isolant électrique qui est enrobé d'une seconde partie concentrique.

La première partie de l'électrode est reliée à une borne d'un circuit électrique, dont l'autre borne est reliée à la seconde partie de ladite électrode.

Les caractéristiques et avantages de la présente invention apparaîtront dans la description qui va suivre, donnée uniquement à titre d'exemple et faite en se référant aux dessins annexés, dans lesquels :
- la Fig. 1 est une vue schématique du soudage de deux pièces par résistance par points,
- la Fig. 2 est une vue en coupe d'une électrode de soudage conforme à l'invention,
- la Fig. 3 est une vue schématique du circuit électrique de soudage.

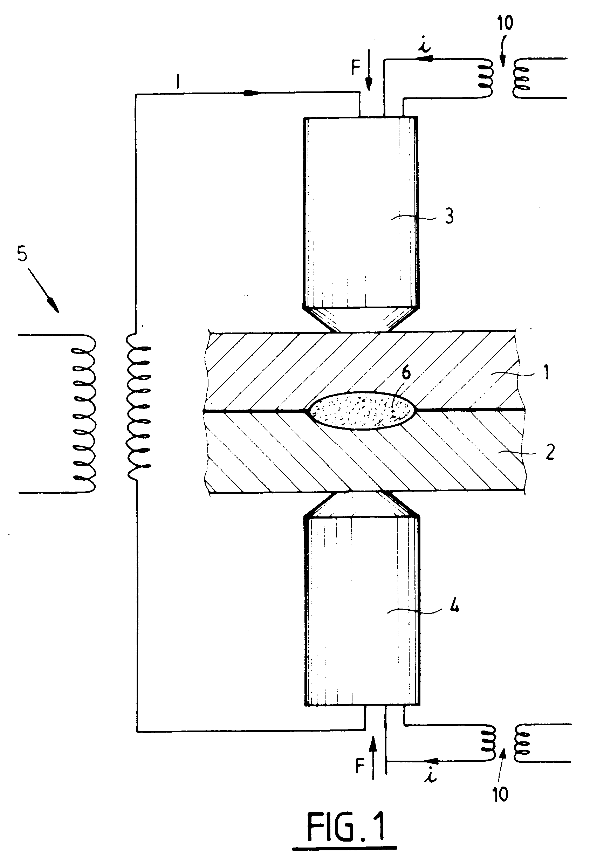

Sur la Fig. 1, on a représenté deux pièces métalliques à souder, respectivement 1 et 2, qui sont pressées l'une contre l'autre par un effort F entre deux électrodes, respectivement 3 et 4, dans lesquelles circulent un courant électrique de soudage I alimenté par un bobinage 5.

Au contact des électrodes 3 et 4 avec les pièces à souder 1 et 2, le courant électrique circule d'une électrode à l'autre en passant par lesdites pièces, et produit, par effet Joule, un échauffement et il se forme à l'interface entre les deux pièces 1 et 2 dans la zone de passage du courant, un noyau fondu 6 qui, après coupure du courant et refroidissement, forme un point de soudure.

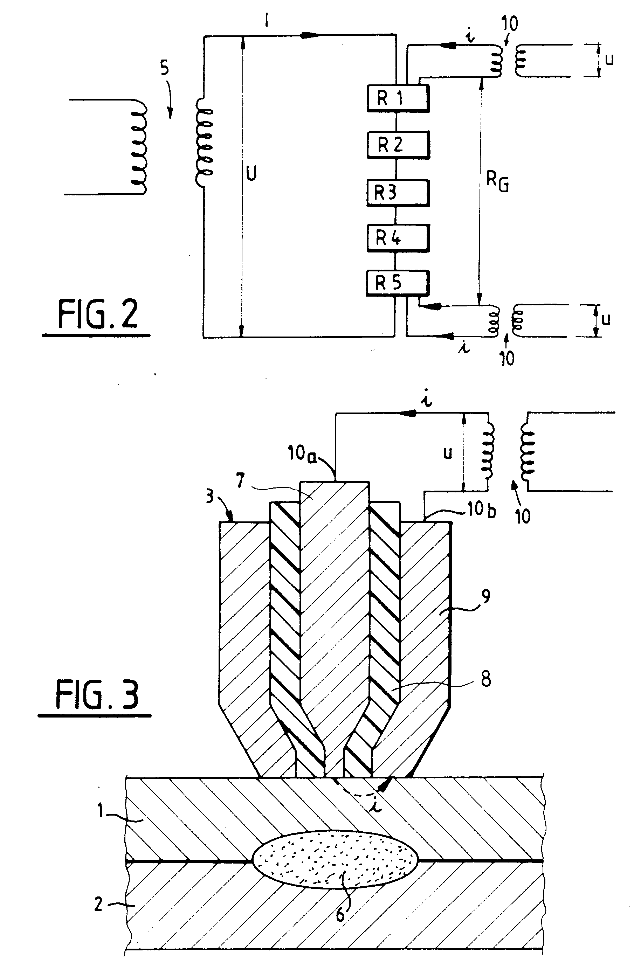

L'électrode de soudage 3 ou 4 représenté à la Fig. 2 est une électrode en cuivre ou en alliage à base de cuivre, par exemple 0.1% de zirconium, 1% de chrome, et 98,9% de cuivre.

Cette électrode 3 ou 4 est constituée d'une première partie 7 centrale, cylindrique qui est entourée d'un isolant électrique 8 lui même enrobé d'une seconde partie 9 concentrique à ladite première partie.

La première partie 7 de l'électrode de soudage 3 est reliée à une borne 10a d'un circuit électrique 10, dont l'autre borne 10b est reliée à la seconde partie 9 de ladite électrode.

Il en est de même pour l'électrode de soudage 4.

Les circuits 10 sont des circuits électriques de type connu délivrant pour chaque électrode 3 ou 4 un courant continu de faible intensité i.

Sur la Fig. 2, on a représenté schématiquement le circuit électrique de soudage.

D'après la loi d'Ohm, $U = RI$ avec :
$U =$ Tension aux bornes des électrodes 3 et 4,
$RG =$ Résistance globale aux bornes des électrodes 3 et 4,
$I =$ Intensité du courant de soudage,

Connaissant la tension U par mesure, l'intensité I du courant de soudage est fonction de la résistance RG aux bornes des électrodes 3 et 4.

Or, cette résistance RG aux bornes des électrodes 3 et 4 se décompose de la façon suivante :
- résistance de contact pièces 1-électrode 3 : R1
- résistance de la pièce 1 : R 2
- résistance de contact pièce 1-pièce 2: R3,
- résistance de la pièce 2 : R4,
- résistance de contact pièce 2-électrode 4: R5.

Les résistances élémentaires R2 et R4, respectivement des pièces 1 et 2, peuvent être calculées en fonction des caractéristiques géométriques desdites pièces.

En revanche, les résistances de contact R1, R3 et R5 sont inconnues et varient au cours du soudage.

Le procédé de soudage, selon la présente invention, permet de déterminer les résistances de contact R1 et R5 et ainsi de calculer R3 pour obtenir l'intensité de soudage optimale et faire varier, au cours du soudage, les paramètres de soudage afin de conserver une intensité constante.

Pour cela, on procède en quatre étapes.

Dans une première étape, on envoie dans les électrodes 3 et 4 un courant de soudage de forte intensité I correspondant à la soudure désirée. Pendant le passage du courant d'intensité I, connaissant la tension U dans le bobinage 5, on détermine, à l'aide de la loi d'Ohm, la résistance globale RG entre les électrodes 3 et 4.

Dans une seconde étape, au moment où on ouvre les thyristors, non représentés, du circuit de soudage, toutes les demi-alternances du courant de soudage, on envoie dans la première partie 7 de l'éléctrode 3 un courant continu de faible intensité i, qui passe dans la pièce 1 en contact avec l'électrode 3 et ressort dans la seconde partie 9 de cette électrode 3, isolée électriquement de ladite première partie 7.

Sur la Fig. 3 on a représenté en traits pointillés le cheminement du courant de faible intensité i.

D'après la loi d'Ohm, connaissant l'intensité i, on mesure la tension aux bornes des deux parties 7 et 9 de l'éléctrode 3 et on détermine la tension de contact R1 pièce 1-électrode 3.

On procède de la même façon pour l'électrode 4 et on détermine ainsi la résistance de contact R5 pièce 2-électrode 4.

Dans une troisième étape, on calcule la résistance de contact R3 entre les deux pièces 1 et 2 de la façon suivante :

$$R3 = RG - R1 - R2 - R4 - R5.$$

Enfin, dans une dernière étape, on ajuste les paramètres de soudage, à savoir soit la tension aux bornes des électrodes 3 et 4, soit le temps de soudage, soit l'effort de pression desdites électrodes afin de conserver une intensité I de soudage constante.

## Revendications

1. Procédé de soudage par résistance par points d'au moins deux pièces métalliques (1, 2), selon lequel on presse lesdites pièces (1, 2) entre deux électrodes (3, 4) alimentées en courant électrique de soudage par un circuit comprenant notamment des thyristors, et on ajuste l'intensité du courant de soudage à appliquer après détermination de la résistance globale RG entre les électrodes (3, 4), caractérisé en ce que, au cours du soudage :

   - on détermine les résistances de contact (R1, R5) de chaque électrode (3, 4) avec la pièce (1, 2) avec laquelle elle est en contact, en envoyant, lorsque les thyristors du circuit sont ouverts, dans une première partie (7) de chaque électrode (3, 4) de soudage un courant continu, qui passe dans la pièce (1, 2) en contact avec l'électrode (3, 4) correspondante et ressort dans une seconde partie (9) de l'électrode (3, 4) correspondante, isolée électriquement de ladite première partie (7).
   - on calcule la résistance de contact (R3) entre lesdites pièces (1, 2) par différence entre la résistance globale (RG) et la somme des résistances (R2, R4) de chaque pièce (1, 2) et des résistances de contact (R1, R5) pièces électrodes,
   - on détermine l'intensité réelle du courant électrique de soudage,
   - et on ajuste les différents paramètres de soudage desdites pièces (1, 2) pour conserver une intensité optimale constante du courant électrique de soudage.

2. Procédé de soudage selon la revendication 1, caractérisé en ce que l'on mesure la tension aux bornes des deux parties (7, 9) de chaque électrode (3, 4) pour déterminer sa résistance de contact (R1, R5) avec la pièce (1, 2) correspondante.

3. Procédé de soudage selon la revendication 1, caractérisé en ce que l'on alimente les électrodes (3, 4) en courant continu toutes les demi-alternances du courant électrique de soudage.

4. Electrode de soudage pour la mise en oeuvre du procédé selon l'une quelconque des revendications 1 à 3, caractérisée en ce qu'elle comprend deux parties (7, 9) distinctes isolées électriquement l'une de l'autre, une première partie (7) centrale entourée d'un isolant électrique (8) s'étendant jusqu'à la surface de contact de l'électrode et qui est enrobé d'une seconde partie (9) concentrique.

5. Electrode de soudage selon la revendication 4, caractérisée en ce que la première partie (7) de l'électrode est reliée à une borne (10a) d'un circuit électrique (10), dont l'autre borne (10b) est reliée à la seconde partie (9) de ladite électrode.

## Patentansprüche

1. Verfahren zum Widerstandspunktschweißen wenigstens zweier Metallteile (1, 2), bei dem die Teile (1, 2) zwischen zwei Elektroden (3, 4) gedrückt werden, die durch eine insbesondere Thyristoren aufweisende Schaltung mit elektrischem Schweißstrom versorgt sind, und bei dem die Stärke des angelegten Schweißstroms nach der Feststellung des Gesamtwiderstands RG zwischen den Elektroden (3, 4) eingestellt wird, dadurch gekennzeichnet, daß beim Schweißen:

   - die Berührungswiderstände (R1, R5) jeder Elektrode (3, 4) mit dem Teil (1, 2), das sie berührt, ermittelt wird, indem, wenn die Thyristoren der Schaltung offen sind, in einen ersten Teil (7) jeder Schweißelektrode (3, 4) ein Gleichstrom eingeleitet wird, der in das mit der entsprechenden Elektrode (3, 4) in Berührung stehende Teil (1, 2) übergeht und in ein von dem ersten Teil (7) elektrisch isoliertes zweites Teil (9) der entsprechenden Elektrode (3, 4) zurückkehrt,

- der Berührungswiderstand (R3) zwischen den Teilen (1, 2) durch die Differenz zwischen dem Gesamtwiderstand (RG) und der Summe der Widerstände (R2, R4) jedes Teils (1, 2) und der Berührungswiderstände (R1, R5) zwischen Teilen und Elektroden berechnet wird,
- die reale Stärke des Schweißstroms berechnet wird,
- und die verschiedenen Schweißparameter der Teile (1, 2) eingestellt werden, um eine konstante optimale Stärke des elektrischen Schweißstroms beizubehalten.

2. Schweißverfahren nach Anspruch 1, dadurch gekennzeichnet, daß die Spannung an beiden Anschlüssen der beiden Teile (7, 9) jeder Elektrode (3, 4) gemessen wird, um ihren Berührungswiderstand (R1, R5) zu dem jeweiligen Teil (1, 2) zu ermitteln.

3. Schweißverfahren nach Anspruch 1, dadurch gekennzeichnet, daß die Elektroden (3, 4) zu jeder Halbperiode des elektrischen Schweißstroms mit Gleichstrom versorgt werden.

4. Schweißelektrode zur Durchführung des Verfahrens nach einem der Ansprüche 1 bis 3, dadurch gekennzeichnet, daß sie zwei verschiedene voneinander elektrisch isolierte Teile (7, 9) aufweist, nämlich ein mittleres erstes Teil (7), das von einem elektrisch isolierenden Material (8) umgeben ist, welches sich bis zur Berührungsfläche der Elektrode erstreckt und von einem konzentrischen zweiten Teil (9) umschlossen ist.

5. Schweißelektrode nach Anspruch 4, dadurch gekennzeichnet, daß das erste Teil (7) der Elektrode mit einem Anschluß (10a) einer elektrischen Schaltung (10) verbunden ist, deren anderer Anschluß (10b) mit dem zweiten Teil (9) der Elektrode verbunden ist.

**Claims**

1. Method for spot resistance welding of at least two metal pieces (1,2), according to which said pieces (1,2) are pressed between two electrodes (3,4) supplied with an electric welding current by a circuit in particular incorporating thyristors and the intensity of the welding current to be applied is adjusted after determining the overall resistance between the electrodes (3,4), characterized in that, during welding:

the contact resistances (R1,R5) of each electrode (3,4) and the piece (1,2) with which it is in contact is determined by supplying, when the thyristors of the circuit are open, into a first portion (7) of each welding electrode (3,4) a direct current, which passes into the piece (1,2) in contact with the corresponding electrode (3,4) and passes out in a second portion (9) of the corresponding electrode (3,4) and which is electrically insulated from said first portion (7),

the contact resistance between said pieces (1,2) is calculated by the difference between the overall resistance (RG) and the sum of the resistances (R2,R4) of each piece (1,2) and the piece-electrode contact resistances (R1,R5),

the real intensity of the electric welding current is determined,

and the different welding parameters of said pieces (1,2) are adjusted in order to maintain a constant optimum intensity of the electric welding current.

2. Welding method according to claim 1, characterized in that the voltage at the terminals of the two portions (7,9) of each electrode (3,4) is measured in order to determine its contact resistance (R1,R5) with the corresponding piece (1,2).

3. Welding method according to claim 1, characterized in that the electrodes (3,4) are supplied with direct current every half-cycle of the electric welding current.

4. Welding electrode for performing the method according to any one of the claims 1 to 3, characterized in that it comprises two separate portions (7,9) electrically insulated from one another, namely a first central portion (7) surrounded by an electrical insulant (8) extending up to the contact surface of the electrode and which is coated with a second concentric portion (9).

5. Welding electrode according to claim 4, characterized in that the first portion (7) of the electrode is connected to one terminal (10a) of an electric circuit (10), whose other terminal (10b) is connected to the second portion (9) of said electrode.

## FIG.1

FIG.2

FIG.3